# EUROPÄISCHE PATENTSCHRIFT

(11) **EP 1 486 126 B1**
(45) Veröffentlichungstag und Bekanntmachung des Hinweises auf die Patenterteilung: **09.12.2009**
(21) Anmeldenummer: 04013698.8
(22) Anmeldetag: 11.06.2004
(51) Int. Cl.: A23G 3/02, A23G 3/04

(54) **Verfahren und Vorrichtung zur thermischen Behandlung von Süsswarenmasse**
Method and apparatus for thermal processing of sugar product masses
Procédé et appareil pour un traitement thermique de masses de sucre

(30) Priorität: 13.06.2003 DE 10326792
(43) Veröffentlichungstag der Anmeldung: 15.12.2004
(73) Patentinhaber: CHOCOTECH GmbH, 38855 Wernigerode (DE)
(72) Erfinder: Demmel, Lucian, 04924 Bad Liebenwerda (DE); Hilker, Erhard, 32657 Lemgo (DE); Markwardt, Klaus, 30880 Laatzen (DE)
(74) Vertreter: Rehberg Hüppe + Partner

(56) Entgegenhaltungen:
- DE-A1- 10 128 287
- NL-A- 8 400 949
- PATENT ABSTRACTS OF JAPAN Bd. 008, Nr. 158 (M-311), 21. Juli 1984 (1984-07-21) & JP 59 052197 A (TOKYO SHIBAURA DENKI KK), 26. März 1984 (1984-03-26)

## Beschreibung

Die Erfindung betrifft ein Verfahren zur thermischen Behandlung von Süßwarenmasse in einem Wärmetauscher mit in einem Mantelgehäuse engständig mit vertikaler Achse angeordneten, von einem Temperiermedium durchströmten Rohren, indem die zu temperierende Süßwarenmasse die Rohre außen umspülend entlang eines Strömungspfades quer zu der Erstreckung der Rohre in dem Mantelgehäuse geführt wird. Die Erfindung bezieht sich auch auf eine Vorrichtung zur thermischen Behandlung von Süßwarenmasse in einem Wärmetauscher mit in einem Mantelgehäuse engständig mit vertikaler Achse angeordneten, von einem Temperiermedium durchströmten Rohren, wobei zur Festlegung eines Strömungspfades quer zu den Rohren im Innenraum des Mantelgehäuses mindestens ein Umlenkelement angeordnet ist. Das Verfahren und die Vorrichtung lassen sich auf zuckerhaltige, aber auch auf zuckerfreie Massen anwenden. Derartige Süßwarenmassen weisen in der Regel Zucker in irgendeiner Form oder aber Zuckeraustauschstoffe auf. Sie können zusätzlich auch andere Einsatzstoffe besitzen, wie sie bei Nahrungs- und Genussmitteln üblich sind. Unter einer thermischen Behandlung wird eine temperaturmäßige Beeinflussung der Masse verstanden, insbesondere ein Kochvorgang, ein Lösevorgang, das Einmischen verschiedener Zuschlagsstoffe unter Temperatureinwirkung und dergleichen.

### STAND DER TECHNIK

Ein Verfahren und eine Vorrichtung der eingangs beschriebenen Art sind aus der DE 35 28 426 A1 oder auch der DE 101 28 287 A1 bekannt. Innerhalb eines Mantelgehäuses mit vertikaler Achse ist ein Bündel paralleler Rohre engständig nebeneinander angeordnet, welches im Falle der Ausbildung eines Kochers für eine wässrige Lösung von zuckerhaltigen oder zuckerfreien Einsatzstoffen von einem Heizmittel, insbesondere Dampf, durchströmt ist. Das Mantelgehäuse weist oben und unten je einen Stutzen zum Anschluss der Dampfleitung bzw. zur Abfuhr des Kondensates auf. Über seitlich zur Achse angeordnete Stutzen wird die Süßwarenmasse zu- bzw. abgeführt, wobei die Anordnung und Strömungsführung so erfolgt, dass die Süßwarenmasse die Vorrichtung von unten nach oben und das Heizmedium die Vorrichtung von oben nach unten strömen. Im Innenraum des Mantelgehäuses sind abständig zueinander Umlenkelemente in Form von Böden vorgesehen, die von den Rohren des Rohrbündels dichtend durchsetzt werden. Die Böden besitzen Durchbrechungen in Form von segmentartigen Öffnungen im Randbereich an abwechselnd diametral gegenüberliegenden Seiten der Innenwandung des Mantelgehäuses. Eine andere Ausführungsform weist konzentrische Durchbrechungen in den Böden auf, denen zusätzliche Prallbleche zugeordnet sind. Damit werden die Rohre im Innenraum des Mantelgehäuses über einen Teil des Strömungspfades quer zur Achse der Rohre bzw. des Mantelgehäuses überströmt. Es sind aber auch Bereiche vorgesehen, die zur Wärmeübertragung nicht nutzbar sind und/oder bei denen der Strömungspfad bereichsweise in Achsrichtung und damit parallel zu den Rohren erfolgt. Damit vergrößert sich die Schichtdicke der Süßwarenmasse an den Rohren, was insbesondere für temperaturempfindliche Massen, die zum Anbrennen neigen, insbesondere milchhaltige Massen, problematisch ist. Auch ändert sich in nachteiliger Weise der von der Süßwarenmasse entlang des Strömungspfades durchströmte Durchströmquerschnitt fortwährend, so dass örtlich sehr unterschiedliche Geschwindigkeiten der Süßwarenmasse auftreten. Dies führt nicht nur zu einer partiell unterschiedlichen Erwärmung der Süßwarenmasse, sondern beinhaltet auch die Gefahr der Schädigung der Masse. Die Verweilzeit der einzelnen Partikel der Süßwarenmasse in der Vorrichtung ist höchst unterschiedlich, wobei sich im Strömungspfad auch tote Zonen und Nester bilden können, in denen ein Teil der Süßwarenmasse unzulässig lange verweilt.

### AUFGABE DER ERFINDUNG

Der Erfindung liegt die Aufgabe zugrunde, ein Verfahren und eine Vorrichtung der eingangs beschriebenen Art bereitzustellen, bei denen die beschriebenen Nachteile zumindest erheblich reduziert sind. Es soll sichergestellt sein, dass die einzelnen Massepartikel beim Durchgang durch die Vorrichtung eine zumindest weitgehend vergleichmäßigte Verweilzeit und damit Behandlungszeit bekommen und während des Durchgangs durch den Wärmetauscher auch möglichst gleichmäßig behandelt werden, so dass das Prinzip first in/first out gewahrt ist.

### LÖSUNG

Die Aufgabe der Erfindung wird erfindungsgemäß mit den Merkmalen der unabhängigen Patentansprüche 1 bzw. 4 gelöst.

### BESCHREIBUNG DER ERFINDUNG

Die Erfindung verlässt eine zickzackförmige Gestaltung des Strömungspfades, wie sie im Stand der Technik bekannt ist, und zwar mit allen ihren Nachteilen. Stattdessen wird ein schraubenlinienartiger oder schraubengangartiger Strömungspfad definiert. Dieser Strömungspfad umrundet die vertikale Achse des Mantelgehäuses mit den darin befindlichen Rohren, wobei auch hier der Strömungspfad von unten nach oben durch den Wärmetauscher geführt ist und so an Höhe gewinnt. Dies kann fortlaufend oder abschnittsweise geschehen. Bedeutsam ist, dass entlang dieses Strömungspfades ein im Wesentlichen konstant bleibender Querschnitt gebildet wird, der von der Süßwarenmasse ohne nennenswerte Geschwindigkeitsunterschiede und Geschwindigkeitsänderungen durchströmt wird. Es findet also eine konstante Durchströmung des Wärmetauschers mit der Süßwarenmasse mit vergleichmäßigten Geschwindigkeiten statt. Toträume werden vermieden. Die Rohre werden quer kontrolliert angeströmt, wobei dies rechtwinklig oder nahezu rechtwinklig geschehen kann.

Der schraubenlinienartige Strömungspfad kann einen von unten nach oben konstant durchgehenden Steigungswinkel aufweisen, so dass auch der Durchtrittsquerschnitt für die Süßwarenmasse von unten nach oben konstant bleibt. Andererseits kann die Steigung über die Höhe des Wärmetauschers auch verändert werden. Insbesondere ist eine progressiv zunehmende Höhe bei gleichbleibender Breite des Durchtrittsquerschnitts entlang des Strömungspfades möglich. Eine solche gezielte Erhöhung des Durchtrittsquerschnitts an bestimmten Stellen des Strömungspfades kann auch dazu genutzt werden, weitere Zuschlagsstoffe über zusätzliche Stutzen in den Strömungspfad einzuführen, so, wie es für die Zusammenstellung und thermische Behandlung der Süßwarenmasse sinnvoll ist. Ein entlang des Strömungspfades größer werdender Querschnitt wird sich insbesondere dann empfehlen, wenn der Wärmetauscher als Kocher z. B. für eine Saccharose/Glukosesirup-Lösung eingesetzt wird und während des Kochvorgangs Wasserdampf frei wird, der mit Hilfe des sich vergrößernden Durchtrittsquerschnitts leichter abgeführt werden kann.

Es ist aber auch möglich, über die Höhe des Wärmetauschers gleichsam Etagen zu schaffen, die sich jeweils um weniger als 360° umlaufend um die Achse des Wärmetauschers befinden. Die Etagen werden dann durch steigungsbehaftete Übergänge miteinander verbunden, wobei sich ein solcher Übergang über einen Winkel von etwa 10° bis 30°, insbesondere 20° erstrecken kann. Auf diese Weise werden zumindest etwa 340° des Umfangs von Rohren durchsetzt und zur Wärmeübertragung genutzt. Es ist aber auch möglich, auch den Bereich der steigungsbehafteten Übergänge mit Rohren auszustatten.

Die Vorrichtung zur thermischen Behandlung der Süßwarenmasse weist einen Kern auf, der sich bei kreisrunder Gestaltung des Mantelgehäuses konzentrisch um die vertikale Achse des Mantelgehäuses erstreckt und der nicht zur Wärmeübertragung genutzt wird. Dieser Kern begrenzt den Durchtrittsquerschnitt innen, während das Mantelgehäuse den Querschnitt außen begrenzt. Oben und unten wird der Durchtrittsquerschnitt über ein oder mehrere Umlenkelemente begrenzt, die zumindest bereichsweise schraubenlinienartig oder schraubengangartig ausgebildet sind. Die Vorrichtung vermeidet Toträume und stellt sicher, dass die Süßwarenmasse mit vergleichmäßigten Geschwindigkeiten über den Querschnitt konstant durch den Wärmetauscher strömen kann. Es wird eine kontrollierte Anströmung und Überströmung der Rohre quer zu deren Erstreckung erreicht. Die Vergleichmäßigung der Anströmbedingungen der Rohre wirkt sich begünstigend auf die Qualität der thermischen Behandlung der Süßwarenmasse und der daraus hergestellten Produkte aus. Bei dieser Gestaltung mit einem innenliegenden Kern kann nicht nur das Mantelgehäuse, sondern auch der Kern für die Anbringung von Zusatzstutzen genutzt werden, um der Süßwarenmasse während der thermischen Behandlung weitere Zuschlagsstoffe zuzuführen oder einen Teil der Süßwarenmasse abzuziehen.

Das schraubenlinienartige Umlenkelement kann konstant steigungsbehaftet ausgebildet sein. Alternativ kann eine variable Steigung verwirklicht werden. Dies kann in progressiver Weise geschehen. Die Steigungsveränderungen können sich auch nur auf bestimmte Bereiche bzw. Abschnitte des Strömungspfades beziehen.

Wenn das Umlenkelement über die Höhe des Wärmetauschers durchgehend konstante oder zunehmende Steigung aufweist, entsteht insgesamt ein Strömungspfad mit konstantem oder zunehmendem Durchtrittsquerschnitt.

Die insbesondere engständig angeordneten Rohre können in radialer Richtung mit unterschiedlichen gegenseitigen Abständen und/oder unter Nutzung unterschiedlicher Rohrdurchmesser angeordnet sein. Durch diese Mittel kann auf den Verlauf des Querschnittsprofils der Geschwindigkeiten in dem kreisringförmigen Querschnitt Einfluss genommen werden. Beispielsweise ist es möglich, radial weiter innen eine Anordnung mit größerem Strömungswiderstand als radial außen vorzusehen, um auf diese Weise im Bereich des innen kürzeren Strömungsweges kleinere Geschwindigkeiten als radial außen anzuwenden, damit das Prinzip des first in/first out für alle Massepartikel der Süßwarenmasse gewahrt bleibt. Eine andere Möglichkeit besteht darin, die engständigen Rohre mit übereinstimmendem gegenseitigem Abstand und unter Einsatz eines im Wesentlichen identischen Rohraußendurchmessers zu verwirklichen und dafür zu sorgen, dass eine Verlagerung der Massenströme der Süßwarenmasse bereichsweise radial von innen nach außen und umgekehrt stattfindet, so dass hierdurch alle Massepartikel eine etwa gleiche Verweilzeit in dem Wärmetauscher erhalten.

Insbesondere kann der Wärmetauscher etagenweise mit konstantem Durchtrittsquerschnitt über weniger als 360° umlaufend für die zu temperierende Süßwarenmasse ausgebildet sein. Die so gebildeten benachbarten Etagen sind über gewindegangartige Leitbleche aneinander angeschlossen. Die Bereiche dieser gewindegangartigen Leitbleche können gleichzeitig genutzt werden, um dort Umschichtbleche für einen Wechsel der Süßwarenmasse radial von innen nach außen und umgekehrt anzuordnen. Darüber hinaus können an nahezu beliebiger Stelle im Strömungspfad für die Süßwarenmasse Verwirbelungsbleche vorgesehen sein, um die Süßwarenmasse intensiv zu durchmischen und damit für eine Vergleichmäßigung der jeweiligen Temperaturen zu sorgen.

Schließlich kann das Mantelgehäuse und/oder der Kern des Wärmetauschers doppelwandig ausgebildet und an einen Temperierkreislauf angeschlossen sein. Auch andere Heiz- oder Kühlelemente können verwirklicht werden. Der Kern des Wärmetauschers besteht insbesondere aus einem Rohr mit im Vergleich zum Mantelgehäuse entsprechend geringerem Durchmesser. Der Querschnitt des Mantelgehäuses und/oder des Kerns ist in der Regel kreisförmig, wenngleich auch andere Querschnitte denkbar sind. Zur Vereinfachung der Herstellung und insbesondere dann, wenn der Wärmetauscher unter Druckanwendung betrieben wird, empfiehlt sich eine kreisförmige Gestaltung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische schematisierte Darstellung der Vorrichtung in einer ersten Ausführungsform.
- **Fig. 2**: zeigt einen Vertikalschnitt durch den oberen Teil der Vorrichtung gemäß Fig. 1.
- **Fig. 3**: zeigt eine Einzelheit aus Fig. 2 mit verdeutlichtem Durchtrittsquerschnitt.
- **Fig. 4**: zeigt einen Horizontalschnitt, bereichsweise mit einem Geschwindigkeitsprofil in radialer Richtung.
- **Fig. 5**: zeigt einen Vertikalschnitt des oberen Bereichs der Vorrichtung in einer zweiten Ausführungsform.
- **Fig. 6**: zeigt einen Horizontalschnitt durch die Vorrichtung gemäß Fig. 5.

### FIGURENBESCHREIBUNG

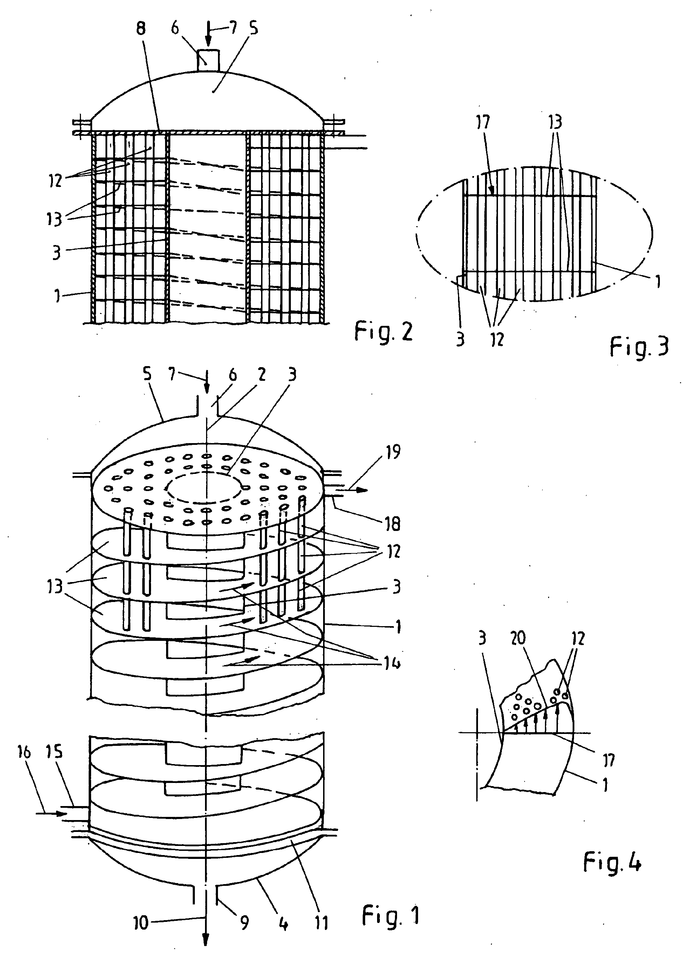

**Fig. 1** zeigt den Wärmetauscher in stark schematisierter perspektivischer Verdeutlichung. Der Wärmetauscher weist ein Mantelgehäuse 1 auf, welches sich konzentrisch um eine vertikale Achse 2 erstreckt. Radial innen, ebenfalls konzentrisch um die Achse 2, befindet sich ein Kern 3, der ebenfalls rohrartig bzw. gehäuseartig ausgebildet ist. Das Mantelgehäuse 1 wird unten durch einen Kuppelboden 4 und oben durch einen Kuppelboden 5 ergänzt. Die Kuppelböden 4 und 5 sind mit dem Mantelgehäuse 1 verflanscht. Der Kuppelboden 5 weist einen Eingangsanschluss 6 beispielsweise für Dampf auf, wenn die Vorrichtung als Dampfkocher benutzt wird. Der Dampf wird gemäß Pfeil 7 in einen Raum innerhalb des Kuppelbodens 5 eingeführt. Dieser Raum wird andererseits durch einen kreisringartigen Boden 8 begrenzt. Der Kuppelboden 4 kann entsprechend symmetrisch ausgebildet und gestaltet sein. Er weist einen Ausgangsanschluss 9, über den gemäß Pfeil 10 das Kondensat bzw. das entsprechende Temperiermedium abgeleitet wird. Der Innenraum des Kuppelbodens 4 wird durch einen entsprechenden Boden 11, der hier nur schematisch angedeutet ist, begrenzt. Die Böden 8 und 11 können identisch ausgebildet sein.

Zwischen den Böden 8 und 11 erstrecken sich eine Vielzahl von Rohren 12. Die Rohre 12 bilden insgesamt oder bereichsweise Rohrbündel. Die einzelnen Rohre 12 sind mit ihrer eigenen Achse jeweils parallel zur Achse 2 des Mantelgehäuses 1 angeordnet. Die Rohre 12 werden innen von dem Temperiermedium durchströmt.

Der Raum zwischen dem Mantelgehäuse 1, dem Kern 3 und den beiden Böden 8 und 11 wird von einem Umlenkelement 13 unterteilt bzw. durchsetzt. Bei diesem Umlenkelement 13 kann es sich um einen Blechstreifen handeln, der gewindegangartig verformt ist und sich mit konstanter oder auch variabler Steigung um die Achse 2 erstreckt. Auch das Umlenkelement 13 wird von den Rohren 12 durchsetzt. Die Rohre 12 durchdringen die Böden 8 und 11 sowie das Umlenkelement 13 flüssigkeits- bzw. druckdicht. Auf diese Weise wird ein schraubengangartiger Strömungspfad um die Achse 2 geschaffen, der durch Pfeile 14 verdeutlicht ist. Am Mantelgehäuse 1 ist unten ein Stutzen 15 angeordnet, durch den die Süßwarenmasse gemäß Pfeil 16 in den Wärmetauscher eingeführt wird. Die Süßwarenmasse strömt die Rohre 12 quer an bzw. umspült die Rohre 12 quer zu deren Erstreckung. Dies geschieht in definiert festgelegtem Strömungspfad, wobei der Süßwarenmasse über die gesamte Höhe des Wärmetauschers und damit Länge des Strömungspfades bei mit konstanter Steigung verwirklichtem Umlenkelement 13 an allen Stellen ein rechteckig begrenzter Durchtrittsquerschnitt 17 zur Verfügung gestellt wird, der am übersichtlichsten aus **Fig. 3** in Einzeldarstellung entnehmbar ist. Dieser Durchtrittsquerschnitt 17 besitzt rechteckige Gestalt. Er weist eine Breite auf, die sich in radialer Richtung vom Kern 3 bis zum Mantelgehäuse 1 erstreckt, während die Höhe durch den Abstand zweier benachbarter Gänge des Umlenkelements 13 festgelegt ist. Es ist überschaubar, dass sich mit variabler Steigung des Umlenkelements 13 die Höhe des Durchtrittsquerschnitts 17 verändert. Dies kann durchaus gewollt sein, um beispielsweise progressiv einen sich vergrößernden Durchtrittsquerschnitt 17 entlang des Strömungspfades zur Verfügung zu stellen. Am oberen Ende unterhalb des Bodens 8 weist das Mantelgehäuse 1 einen Stutzen 18 auf, über welchen die thermisch behandelte Süßwarenmasse gemäß Pfeil 19 den Wärmetauscher verlässt.

**Fig. 4** zeigt ein Geschwindigkeitsprofil 20 in radialer Richtung über den Durchtrittsquerschnitt 17. Durch die spezielle Anordnung der Rohre 12 kann in radialer Richtung der örtliche Widerstand über die Rohre 12 in dem Durchtrittsquerschnitt 17 bewusst unterschiedlich gestaltet werden, um auf die Verteilung der Geschwindigkeiten über das Querschnittsprofil, die durch Pfeildarstellungen verdeutlicht sind, Einfluss zu nehmen. So können die Rohre 12 beispielsweise im Bereich, der radial dem Kern 3 zugekehrt ist, mit engerem gegenseitigen Abstand und/oder unter Verwendung von Rohren 12 mit vergleichsweise größeren Außendurchmesser, jeweils im Vergleich zu weiter radial außen liegenden Stellen, etwa in der Nähe des Mantelgehäuses 1, ausgebildet sein, um so ein bewusst in radialer Richtung asymmetrisches Querschnittsprofil der Geschwindigkeiten zu bekommen und damit das first in/first out-Prinzip zu verwirklichen. Es ist aber ohne weiteres auch möglich, die Rohre 12 mit übereinstimmendem gegenseitigen Abstand regelmäßig verteilt anzuordnen. In diesem Fall ist der Widerstand, den die Rohre 12 auf die Süßwarenmasse ausüben, in radialer Richtung konstant. Da der Strömungsweg radial innen kürzer als radial außen ist, werden sich entsprechende Geschwindigkeitsunterschiede an den einzelnen Partikeln der Süßwarenmasse einstellen, je nach dem Ort, an dem sie sich gerade befinden.

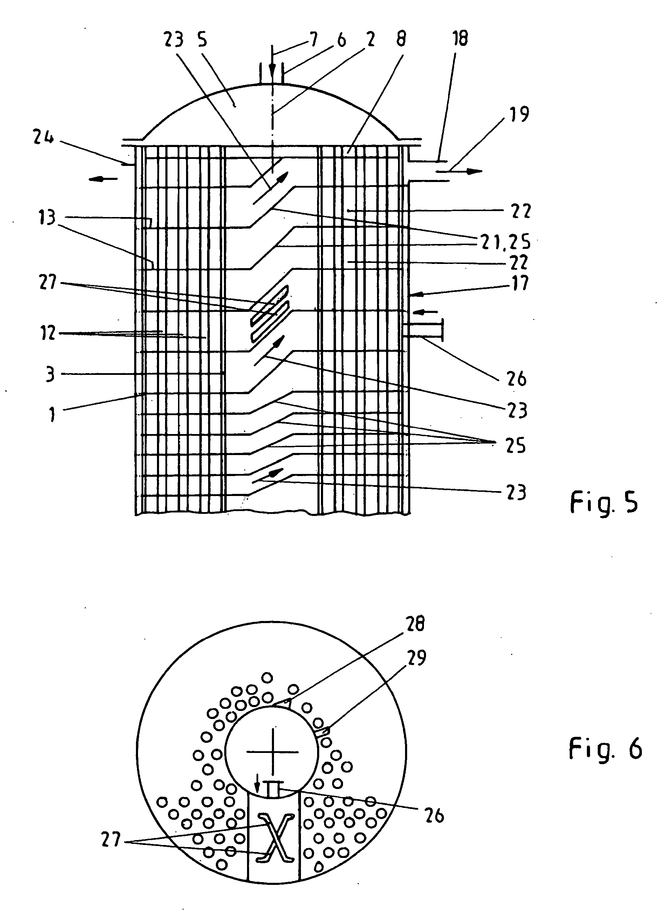

In den **Fig. 5 und 6** ist eine weitere Ausführungsform der Vorrichtung dargestellt. Diese besitzt prinzipiell einen ähnlichen Aufbau wie die Ausführungsform der Fig. 1 bis 4. Es sind lediglich mehrere Umlenkelemente 13 in dem Innenraum zwischen Kern 3, Mantelgehäuse 8 und den beiden Böden 8 und 11 vorgesehen. Die Umlenkelemente 13 werden von kreissektorartigen Blechen gebildet, die sich um die Achse 2 ohne Höhengewinn umlaufend um etwa 340° erstrecken. Diese Umlenkelemente 13 sind damit exakt rechtwinklig zu den Rohren 12 angeordnet und werden von diesen auch rechtwinklig durchsetzt. Die Umlenkelemente 13 werden durch Übergänge 21 ergänzt. Jeder Übergang 21 verbindet zwei benachbarte Etagen 22, die durch die Umlenkelemente 13 gebildet werden. Auf diese Weise sind lediglich die Übergänge 21 schraubenlinienartig ausgebildet und angeordnet, so dass die die Durchtrittsquerschnitte 17 durchströmende Süßwarenmasse lediglich im Bereich der Übergänge 21 Höhe gewinnt und in die jeweils darüber befindliche Etage 22 übertritt. Auch hier ist der Strömungspfad durch Pfeile 23 verdeutlicht.

Das Mantelgehäuse 1 ist hier doppelwandig dargestellt, um eine Schutzheizung zu bilden. Der so gebildete Innenraum ist an einen Temperierkreislauf 24 angeschlossen. Ebenso kann auch der Kern 3 doppelwandig ausgebildet und von einem Temperiermedium durchflossen sein, was aus Übersichtlichkeitsgründen jedoch nicht dargestellt ist.

Die Übergänge 21 werden von gewindeartigen Leitblechen 25 gebildet. Fig. 5 verdeutlicht die Anordnung von Leitblechen 25 unterschiedlicher Steigung in Verbindung mit unterschiedlichen Höhen der gebildeten Etagen 22. Eine solche Gestaltung kann z. B. sinnvoll sein, wenn der den Wärmetauscher durchfließenden Süßwarenmasse während der thermischen Behandlung ein größerer Querschnitt zur Verfügung gestellt werden soll und/oder wenn z. B. durch einen Zusatzstutzen 26 der Süßwarenmasse ein Zusatzstoff hinzugegeben werden soll. Alternativ oder zusätzlich können solche Zusatzstutzen 26 auch im Bereich des Kerns 3 angeordnet sein, wie dies aus Fig. 6 erkennbar ist.

Der Bereich der Übergänge 21 zwischen den Leitblechen 25 kann für die Anordnung von Umschichtblechen 27 genutzt werden. Solche Umschichtbleche 27 können schaufelartige Gestalt aufweisen. Sie sind in der Regel paarweise angeordnet und dienen dazu, einen im Bereich einer Etage radial innen sich auf einem kreisförmigen Strömungspfad bewegenden Massestrom in einen Bereich radial außen und umgekehrt zu verlagern, so dass Massepartikel, die in einer unteren Etage z. B. radial innen strömen, in der sich anschließenden nächsthöheren Etage bewusst nach radial außen verlagert werden. Dieser Wechsel bzw. diese Umschichtung von Masseströmen und Massepartikeln von innen nach außen und umgekehrt wird über die Höhe des Wärmetauschers entsprechend eingehalten, um letztendlich darauf hinzuwirken, dass alle Massepartikel den Wärmetauscher mit etwa gleicher Verweilzeit und vergleichmäßigter Geschwindigkeit sowie vergleichmäßigter thermischer Behandlung durchströmen. Es versteht sich, dass in Verbindung mit den Umschichtblechen 27 die Rohre 12 in regelmäßiger Anordnung vorgesehen sein können. Um eine zusätzliche Verwirbelung der Süßwarenmasse beim Durchströmen der Durchtrittsquerschnitte 17 zu erhalten, können Verwirbelungsbleche 28 und 29 in verschiedenen Ausführungen und an verschiedenen Stellen des Querschnitts angeordnet sein. In der Regel sind solche Verwirbelungsbleche 28, 29 jedoch nicht erforderlich, da durch die bloße Umströmung der Rohre 12 bereits eine hinreichende Verwirbelung und Durchmischung der Süßwarenmasse eintritt.

### BEZUGSZEICHENLISTE

- 1: Mantelgehäuse
- 2: Achse
- 3: Kern
- 4: Kuppelboden
- 5: Kuppelboden
- 6: Eingangsanschluss
- 7: Pfeil
- 8: Boden
- 9: Ausgangsanschluss
- 10: Pfeil
- 11: Boden
- 12: Rohr
- 13: Umlenkelement
- 14: Pfeil
- 15: Stutzen
- 16: Pfeil
- 17: Durchtrittsquerschnitt
- 18: Stutzen
- 19: Pfeil
- 20: Geschwindigkeitsprofil
- 21: Übergang
- 22: Etage
- 23: Pfeil
- 24: Temperierkreislauf
- 25: Leitblech
- 26: Zusatzstutzen
- 27: Umschichtblech
- 28: Verwirbelungsblech
- 29: Verwirbelungsblech

## Patentansprüche

1. Verfahren zur thermischen Behandlung von Süßwarenmasse in einem Wärmetauscher mit in einem Mantelgehäuse (1) engständig mit vertikaler Achse (2) angeordneten, von einem Temperiermedium durchströmten Rohren (12), indem die zu temperierende Süßwarenmasse die Rohre (12) außen umspülend entlang eines Strömungspfades quer zu der Erstreckung der Rohre (12) in dem Mantelgehäuse (1) geführt wird, **dadurch gekennzeichnet, dass** die zu temperierende Süßwarenmasse in einem schraubenlinienartigen Strömungspfad um die vertikale Achse (2) des Mantelgehäuses (1) geführt wird.

2. Verfahren nach Anspruch 1, **dadurch gekennzeichnet, dass** die zu temperierende Süßwarenmasse in dem schraubenlinienartigen Strömungspfad um die vertikale Achse (2) des Mantelgehäuses (1) durch einen entlang des Strömungspfades abgesehen von den Rohren (12) konstant bleibenden Durchtrittsquerschnitt (17) quer zu den Rohren (12) geführt wird.

3. Verfahren nach Anspruch 1, **dadurch gekennzeichnet, dass** die zu temperierende Süßwarenmasse jeweils bereichsweise um weniger als 360° auf gleicher Höhe relativ zum Mantelgehäuse (1) um die Achse (2) umlaufend geführt wird, und dass die Anhebung der Süßwarenmasse von einem derartigen in einen benachbarten Bereich vermittels steigungsbehafteter Übergänge (21) erfolgt.

4. Vorrichtung zur thermischen Behandlung von Süßwarenmasse in einem Wärmetauscher mit in einem Mantelgehäuse (1) engständig mit vertikaler Achse (2) angeordneten, von einem Temperiermedium durchströmten Rohren (12), wobei zur Festlegung eines Strömungspfades quer zu den Rohren (12) im Innenraum des Mantelgehäuses (1) mindestens ein Umlenkelement angeordnet ist, insbesondere nach einem der Ansprüche 1 bis 3, **dadurch gekennzeichnet, dass** der Wärmetauscher konzentrisch zu seiner Achse (2) einen den Strömungspfad begrenzenden Kern (3) aufweist, und dass das Umlenkelement (13) das Mantelgehäuse (1) mit dem Kern (3) verbindet und zumindest bereichsweise schraubenlinienartig ausgebildet und angeordnet ist.

5. Vorrichtung nach Anspruch 4, **dadurch gekennzeichnet, dass** entlang des Strömungspfades ein konstant bleibender rechteckig begrenzter und von den Rohren (12) durchsetzter Durchtrittsquerschnitt (17) für die zu temperierende Süßwarenmasse gebildet ist.

6. Vorrichtung nach Anspruch 4 oder 5, **dadurch gekennzeichnet, dass** das schraubenlinienartige Umlenkelement (13) über die Höhe des Wärmetauschers durchgehend einen konstanten Steigungswinkel aufweist.

7. Vorrichtung nach Anspruch 4 oder 5, **dadurch gekennzeichnet, dass** das Umlenkelement (13) nur bereichsweise einen konstanten oder zunehmenden Steigungswinkel aufweist.

8. Vorrichtung nach mindestens einem der Ansprüche 4 bis 7, **dadurch gekennzeichnet, dass** die engständigen Rohre (12) in radialer Richtung mit unterschiedlichen gegenseitigen Abständen und/oder unterschiedlichen Rohrdurchmessern angeordnet sind.

9. Vorrichtung nach mindestens einem der Ansprüche 4 bis 8, **dadurch gekennzeichnet, dass** der Wärmetauscher etagenweise mit konstantem Durchtrittsquerschnitt (17) über weniger als 360° umlaufend für die zu temperierende Süßwarenmasse ausgebildet ist, und dass die so gebildeten benachbarten Etagen (22) über gewindegangartige Leitbleche (25) aneinander angeschlossen sind.

10. Vorrichtung nach mindestens einem der Ansprüche 4 bis 9, **dadurch gekennzeichnet, dass** im Strömungspfad für die Süßwarenmasse Umschichtbleche (27) für einen Wechsel der Süßwarenmasse radial von innen nach außen und umgekehrt vorgesehen sind.

11. Vorrichtung nach mindestens einem der Ansprüche 4 bis 10, **dadurch gekennzeichnet, dass** im Strömungspfad für die Süßwarenmasse Verwirbelungsbleche (28, 29) vorgesehen sind.

12. Vorrichtung nach mindestens einem der Ansprüche 4 bis 11, **dadurch gekennzeichnet, dass** das Mantelgehäuse (1) und/oder der Kern (3) des Wärmetauschers doppelwandig ausgebildet und an einen Temperierkreislauf (24) angeschlossen ist.

## Claims

1. A method for thermally treating a confectionery mass in a heat exchanger including tubes (12) being located in a housing (1) in a close relationship in a way to have a vertical axis (2), a tempering medium flowing through the tubes (12), the confectionery mass to be tempered being guided in the housing (1) along a flow path in a direction transverse to the extension of the tubes (12) and in a way to flow about the outside of the tubes (12), **characterised in that** the confectionery mass to be tempered is guided about the vertical axis (2) of the housing (1) along a flow path having a helical shape.

2. The method of claim 1, **characterised in that** the confectionery mass to be tempered is guided along the helical flow path about the vertical axis (2) of the housing (1) through a passage cross section (17), the passage cross section (17) being constant in a direction transverse to the tubes (12) with the exception of the tubes (12).

3. The method of claim 1, **characterised in that** the confectionery mass to be tempered is guided in sections to circulate about the axis (2), the confectionery mass to be tempered being guided in each of the sections about less than 360° at the same height with respect to the housing (1), and that the confectionery mass is lifted from a first section to an adjacent section by transitions (21) having a pitch.

4. An apparatus for thermally treating a confectionery mass in a heat exchanger including tubes (12) being located in a housing (1) in a close relationship in a way to have a vertical axis (2), a tempering medium flowing through the tubes (12), a deflecting element being arranged in the interior of the housing (1) in a way to determine a flow path in a direction transverse to the tubes (12), especially according to at least one of claims 1 to 3, **characterised in that** the heat exchanger includes a core (3) being arranged concentrically with respect to the axis (2) and in a way to limit the flow path and that the deflecting element (13) connects the housing (1) to the core (3) and at least is partly designed and arranged to be helical.

5. The apparatus of claim 4, **characterised in that** a passage cross section (17) for the confectionery mass to be tempered is formed along the flow path, the passage cross section (17) being constant and rectangular, the tubes (12) protruding into the passage cross section (17).

6. The apparatus of claim 4 or 5, **characterised in that** the helical deflecting element (13) has a pitch angle being constant over the height of the heat exchanger.

7. The apparatus of claim 4 or 5, **characterised in that** the deflecting element (13) only in sections has a constant or increasing pitch angle.

8. The apparatus of at least one of claims 4 to 7, **characterised in that** the tubes (12) being located in a close relationship are arranged at different distances with respect to one another in a radial direction and/or have different tube diameters.

9. The apparatus of at least one of claims 4 to 8, **characterised in that** the heat exchanger is designed to have different levels having a constant passage cross section (17) about less than 360° serving for the circulating flow of the confectionery mass to be tempered and that the adjacent levels (22) formed in this way are interconnected via threadlike guiding plates (25).

10. The apparatus of at least one of claims 4 to 9, **characterised in that** rearranging plates (27) are provided in the flow path for the confectionery mass, the rearranging plates (27) serving for a change of the confectionery mass from a radial inward direction towards the outside and vice versa.

11. The apparatus of at least one of claims 4 to 10, **characterised in that** swirling plates (28, 29) for the confectionery mass are provided in the flow path.

12. The apparatus of at least one of claims 4 to 11, **characterised in that** the housing (1) and/or the core (3) of the heat exchanger are designed to be double-walled and they are connected to a tempering circuit (24).

## Revendications

1. Procédé de traitement thermique de masses de sucrerie dans un échangeur de chaleur, avec des tubes (12) parcourus par un fluide de temperement, placés étroitement avec leurs axes (2) verticaux dans un caisson (1), la masse de sucrerie à tempérer étant guidée en balayant extérieurement les tubes (12) le long d'un chemin d'écoulement perpendiculairement l'extension des tubes (12) **caractérisé en ce que** la masse de sucrerie à tempérer est guidée selon un chemin hélicoïdal autour de l'axe vertical (2) du caisson (1).

2. Procédé selon la revendication 1, **caractérisé en ce que** la masse de sucrerie à tempérer est guidée, sur le chemin hélicoïdal autour de l'axe vertical (2) du caisson (1), à travers une section de passage (17) perpendiculaire aux tubes (12), restant constante, à l'exception des tubes (12), le long du chemin d'écoulement.

3. Procédé selon la revendication 1, **caractérisé en ce que** la masse de sucrerie à tempérer est guidée pour tourner de l'axe (2), respectivement de moins de 360° selon les secteurs, à la même hauteur par rapport au caisson (1) et **en ce que** le relèvement de la masse de sucreries s'effectue au moyen d'un des passages (21) présentant une inclinaison, dans un secteur voisin.

4. Dispositif pour le traitement thermique de masses de sucrerie dans un échangeur de chaleur, avec des tubes (12) parcourus par un fluide de temperement, disposés étroitement avec leurs axes (2) verticaux dans un caisson (1), la masse de sucrerie à tempérer étant guidée en balayant extérieurement les tubes (12), dans lequel est disposé au moins un élément de déviation pour déterminer un chemin d'écoulement, transversalement aux tubes (2) dans l'espace interne du caisson (1) notamment selon les revendications 1 à 3, **caractérisé en ce que** l'échangeur de chaleur présente, concentriquement à son axe, un noyau (3) limitant le chemin d'écoulement et **en ce que** l'élément de déviation (13) réunit le caisson (1 au noyau (3) et est formé et disposé, au moins par secteurs, par des lignes de vis.

5. Dispositif selon la revendication 4, **caractérisé en ce qu'**il est formé, le long du chemin d'écoulement, une section de passage (17) demeurant constante, limitée à angle droit et traversée par les tubes (12) pour la masse de sucrerie à tempérer.

6. Dispositif selon la revendication 4 ou 5, **caractérisé en ce que** l'élément de déviation (13) présente un angle de pente constant ou en augmentation en continu sur la hauteur de l'échangeur de chaleur.

7. Dispositif selon la revendication 4 ou 5, **caractérisé en ce que** l'élément de déviation (13) ne présente un angle de pente constant ou en augmentation que par secteurs.

8. Dispositif selon au moins une des revendications 4 à 7, **caractérisé en ce que** les tubes (12) étroitement placés sont disposés avec différents intervalles et/ ou différents diamètres en direction radiale.

9. Dispositif selon au moins une des revendications 4 à 8, **caractérisé en ce que** l'échangeur de chaleur est formé par étage avec des sections de passage (17) constantes tournant sur moins de 360° pour la masse de sucrerie à tempérer et **en ce que** les étages voisins ainsi formés (22) sont raccordés entre eux par des tôles en forme de pas de vis (25).

10. Dispositif selon au moins une des revendications 4 à 9, **caractérisé en ce que** sur le chemin d'écoulement pour la masse de sucreries sont prévues des tôles de redistribution (27) pour changer la masse de sucrerie radialement de l'intérieur vers l'extérieur et inversement.

11. Dispositif selon au moins une des revendications 4 à 10, **caractérisé en ce que** des tôles de tourbillonnement (28, 29) sont prévues sur le chemin d'écoulement pour la masse de sucreries.

12. Dispositif selon au moins une des revendications 4 à 11, **caractérisé en ce que** le caisson (1) et/ou le noyau (3) de l'échangeur de chaleur est réalisé à double paroi et est relié à un circuit de températion.
